# EUROPÄISCHE PATENTSCHRIFT

(11) **EP 3 416 457 B1**
(45) Veröffentlichungstag und Bekanntmachung des Hinweises auf die Patenterteilung: **13.05.2020**
(21) Anmeldenummer: 18176508.2
(22) Anmeldetag: 07.06.2018
(51) Int. Cl.: H05B 6/06, H05B 6/12

(54) **VERFAHREN ZUM BETRIEB EINES INDUKTIVEN KOCHSYSTEMS**
METHOD FOR OPERATING AN INDUCTIVE COOKING SYSTEM
PROCÉDÉ DE FONCTIONNEMENT D'UN SYSTÈME DE CUISSON INDUCTIF

(30) Priorität: 13.06.2017 DE 102017112945
(43) Veröffentlichungstag der Anmeldung: 19.12.2018
(60) Teilanmeldung: 20151466.8
(73) Patentinhaber: Miele & Cie. KG, 33332 Gütersloh (DE)
(72) Erfinder: Ebke, Daniel, 33613 Bielefeld (DE); Ennen, Volker, 32130 Enger (DE); Gehring, Nils Marius, 32257 Bünde (DE)

(56) Entgegenhaltungen:
- EP-A1- 1 816 659
- WO-A1-2010/080738
- WO-A1-2015/154237
- WO-A2-2015/128578
- DE-A1-102009 029 253
- DE-A1-102010 039 071
- DE-A1-102015 222 797
- DE-A1-102016 108 680
- JP-A- 2007 134 257

## Beschreibung

Die vorliegende Erfindung betrifft ein Verfahren zum Betrieb eines induktiven Kochsystems gemäß des Patentanspruchs 1, ein induktives Kochsystem zur Durchführung eines derartigen Verfahrens gemäß des Patentanspruchs 10.

Im Bereich der heimischen Kochprozesse geht der Trend immer weiter zur einfacheren und komfortableren Durchführung der Kochprozesse hin. Insbesondere sollen Automatikprogramme zur Verfügung gestellt werden, welche dem Benutzer einen Teil der Durchführung des Kochprozesses abnehmen sollen. Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Aus der US 6 953 919 B2 ist ein System und ein Verfahren zum Bereitstellen mehrerer Garmodi und eine Fähigkeit bekannt, Kochgeschirre und andere Objekte automatisch mittels des Systems zu erwärmen, wobei eine Datenübertragung von einem Kochgeschirr auf eine Steuereinheit des Systems mittels einer RFID-Technologie zustande kommt. Das Geschirr umfasst dazu einen RFID-Tag und einen Temperatursensor.

Aus der DE 197 29 662 A1 ist ein Informations-Übertragungssystem für automatisch zu betreibende Kochgefäße auf einer Beheizungseinrichtung einer Kochstelle bekannt, welches Informationen von Sensoren, die sich im Inneren des Kochgefäßes befinden, an Empfangsmittel der Beheizungseinrichtung überträgt. Dazu befindet sich an dem Kochgefäß oder dessen Deckel eine Sendespule zum Aussenden der Signale.

Aus der DE 10 2009 003 105 A1 ist ein Transponder, insbesondere ein RFID-Tag, für ein Kochgeschirr sowie ein Kochgeschirr mit einem derartigen Transponder bekannt, wobei der Transponder hochtemperaturfest ist und mindestens einen Temperatursensor aufweist. Aufgrund seiner hochtemperaturfesten Ausgestaltung kann der Transponder an einer Stelle auf dem Kochgeschirr angebracht werden, welche sich nahe an dem zu erwärmenden Gargut befindet.

Nachteilig ist bei den zuvor beschriebenen Systemen und Vorrichtungen, dass eine Kommunikation zwischen Kochgeschirr und Kochfeld bzw. Kochstelle oder dergleichen über eine Funkübertragung z.B. mittels Transpondertechnik stattfindet. Dies kann eine Fernwirkung darstellen, d.h. eine Steuerung und bzw. oder eine Regelung eines Gerätes durch einen Befehl, der außerhalb der Sichtweite eines Gerätes vorgenommen werden kann. Somit kann zwischen den Teilnehmern eine Kommunikation und damit verbunden eine gegenseitige oder zumindest einseitige Beeinflussung stattfinden, auch wenn sich diese nicht in ihrem bestimmungsgemäßen Einsatz befinden. Mit anderen Worten könnte z.B. auch eine Bedienung des Kochfelds bzw. der Kochstelle durch das Kochgeschirr bewirkt werden, obwohl sich das Kochgeschirr gar nicht auf dem Kochfeld bzw. auf der Kochstelle befindet. Da dies die Sicherheit des Benutzers gefährden kann, sind derartige Fernwirkungen im Haushalt gemäß der Norm DIN EN 60335-01 (VDE 0700-1) zu unterbinden. Die zuvor beschriebenen Systeme und Vorrichtungen könnten somit nicht normgerecht sein, was ihren Einsatz verhindern kann.

Aus der nachveröffentlichten DE 10 2016 108 680 A1 ist ein Kochsystem mit einem Kochgeschirr und einer Kochstelle bekannt, bei dem die Kommunikation zwischen dem Kochgeschirr und der Kochstelle mittels Körperschallsignalen erfolgt.

Die Druckschrift WO 2015 154237 A1 zeigt ein Kochsystem mit einem Kochgeschirr und einer Kochstelle bekannt, bei dem an dem Kochgeschirr Bedienelemente zur Einstellung einer Beheizungsart der Kochstelle. Die Signalübertragung erfolgt drahtlos, beispielsweise mittels Infrarotsignalen oder der Bluetooth-Technik. Eine drahtlose Signalübertragung zwischen Kochgeschirr und einer Kochstelle über einen Funkkanal ist auch aus den Druckschriften JP 2007 134257 A und WO 2010 080728 A1 bekannt. Die Druckschrift WO 2015 128578 A2 zeigt, dass die drahtlose Signalübertragung zwischen Kochgeschirr und Kochgerät auch unter Zwischenschaltung eines mobilen Gerätes möglich ist.

Die Druckschriften DE 10 2010 039 071 A1, DE 10 2015 222 797 A1 und DE 10 2009 029 253 A1 offenbaren ein System aus einem Kochgerät und einem auf dem Kochgerät aufsetzbaren Kochgeschirr. Kochgeschirr und Kochgerät sind zur drahtlosen Kommunikation untereinander eingerichtet. Dabei weist das Kochgeschirr eine elektrische Spule zur transformatorischen Kopplung mit einer Spule des Kochgerätes auf. Aus der Druckschrift EP 1 816 659 A1 ist bekannt, das Kochgeschirr über eine elektrische Spule zur transformatorischen Kopplung mit einer Spule des Kochgerätes mit elektrischer Energie zu versorgen, um eine Heizspirale zum Kochen von Wasser betreiben zu können.

Aus der DE 197 54 851 A1 ist ein Induktions-Kochsystem bekannt, dessen Kochgeschirr durch einen temperaturabhängig bewegten Permanentmagneten temperaturgeregelt ist und sich in einem wärmeisolierten Übertopf befindet. Der Permanentmagnet wird durch ein Thermobimetall bewegt, welches in einem Luftspalt zwischen Kochgeschirrboden und Übertopfboden angeordnet ist. Die Regler-Konstruktionsanordnung ist so weit unter den Kochgeschirrboden geschoben, dass sie vollständig innerhalb des Übertopfmantels liegt. Das Bimetall ist nicht ferromagnetisch. Der unter der Kochstelle angeordnete Reedkontakt, auf den der Permanentmagnet einwirkt, befindet sich zur Abschirmung des Induktionsfeldes in einem oben offenen Rohr aus ferromagnetischem Material.

Bei diesem Kochsystem kann zwar auf eine Kommunikation mittels Funkübertragung verzichtet werden. Nachteilig ist jedoch, dass hierzu ein hoher Aufwand erforderlich ist, indem ein sehr spezieller und aufwendiger Topf als Kochgeschirr verwendet werden und die Kochstelle entsprechend ausgebildet sein muss. Ferner kann auf diese Weise nur eine Kommunikation vom Kochgeschirr zur Kochstelle erfolgen. Auch kann mittels dieser Kommunikation lediglich eine einzige vorbestimmte Messgröße, nämlich ein Temperaturwert, übertragen werden. Eine Kommunikation in die entgegengesetzte Richtung sowie die Übertragung anderer Daten ist konstruktionsbedingt gar nicht möglich. Ferner muss der Topf passend über dem Reedkontakt der Kochstelle positioniert werden, damit das Kochsystem bestimmungsgemäß funktionieren kann.

Zur Durchführung eines automatisierten Kochprozesses von Wasser sind seit langem Wasserkocher bekannt. Diese weisen üblicherweise einen Druck- oder Kippschalter auf, welcher vom Benutzer betätigt werden kann, um den Wasserkochprozess zu starten. Durch die Betätigung des Druck- oder Kippschalters wird ein Bimetall-Schalter gespannt und die elektrische Versorgung einer Heizspule gestartet. Der Bimetall-Schalter ist ausgelegt, bei Erreichen der Kochtemperatur des Wassers durch Zurückverformung seine Spannung zu verlieren, wodurch der Druck- oder Kippschalter zurückgesetzt und die elektrische Versorgung der Heizspule beendet wird. Somit kann durch das einmalige Betätigen des Druck- oder Kippschalters durch den Benutzer ein vorbestimmter Kochprozess gestartet werden, welcher selbstständig durch den Wasserkocher beendet wird, so dass das gewünschte Ergebnis des Kochprozesses durch eine einmalige Betätigung durch den Benutzer automatisiert erreicht werden kann.

Nachteilig ist bei derartigen Wasserkochern, dass diese zur Energieversorgung eine eigene Betriebsstation erfordern, auf der sie betrieben werden müssen. Wird der Wasserkocher samt Betriebsstation verstaut, so ist für die Betriebsstation ein zusätzlicher Stauraum erforderlich. Wird der Wasserkocher verwendet bzw. betriebsbereit z.B. auf einer Küchenzeile aufbewahrt, so wird dieser Platz zeitweise bzw. dauerhaft blockiert und kann nicht anderweitig genutzt werden.

Eine Aufgabe der vorliegenden Erfindung ist es, ein Verfahren zum Betrieb eines induktiven Kochsystems, vorzugsweise mit wenigstens einem Kochfeld und mit wenigstens einem Kochgeschirr, der eingangs beschriebenen Art bereitzustellen, so dass ein Garprozess, vorzugsweise ein Kochprozess, auf einfache Art und Weise gestartet werden kann. Vorzugsweise soll eine Bedienung lediglich am Kochgeschirr erforderlich sein. Vorzugsweise soll der Gar- bzw. Kochprozess möglichst einfach selbsttätig beendet werden können. Vorzugsweise soll dies mittels einer sicheren Kommunikation zwischen dem Kochgeschirr und der Kochstelle geschehen, wobei die sichere Kommunikation vorzugsweise normgerecht sein, d.h. eine Fernwirkung sicher ausschließen, soll. Vorzugsweise soll dies für einen Wasserkochprozess umgesetzt werden. Vorzugsweise soll auf Energiespeicher des Kochgeschirrs verzichtet werden können. Zumindest soll eine alternative Möglichkeit zum Betrieb eines induktiven Kochsystems bereitgestellt werden.

Die Aufgabe wird erfindungsgemäß durch ein Verfahren mit den Merkmalen des Patentanspruchs 1, durch ein induktives Kochsystem mit den Merkmalen des Patentanspruchs 10 gelöst. Vorteilhafte Weiterbildungen sind in den Unteransprüchen beschrieben.

Somit betrifft die vorliegende Erfindung ein Verfahren zum Betrieb eines induktiven Kochsystems, wobei das induktive Kochsystem die Merkmale nach Anspruch 10 aufweist. Der vorliegenden Erfindung liegt dabei der Gedanke zugrunde, dass auf diese Art und Weise durch den Benutzer lediglich eine einmalige Betätigung des Betätigungselements des Kochgeschirrs ausgeführt werden muss, um den gesamten weiteren Ablauf des Verfahrens zu initialisieren. Hierdurch kann das erfindungsgemäße Verfahren bzw. ein entsprechendes Kochgeschirr mit lediglich einem Betätigungselement auskommen, um das erfindungsgemäße Verfahren zu starten und auszuführen.

Dies ist dadurch möglich, dass durch das einmalige Betätigen des Betätigungselements des Kochgeschirrs durch den Benutzer ein Pairing zwischen Kochfeld bzw. dessen Kochstelle und Kochgeschirr ausgelöst wird, welches zu einem Verbinden von Kochstelle und Kochgeschirr führt. Mit anderen Worten wird durch das einmalige Betätigen des Betätigungselements des Kochgeschirrs durch den Benutzer ein Senden eines Signals von der Kochstelle an das Kochgeschirr zurück ausgelöst, welches eine Reaktion seitens des Kochgeschirrs auslöst, die zu einem erfolgreichen Pairing von Kochgeschirr und Kochfeld bzw. Kochstelle führt. Dieses erfolgreiche Pairing kann seitens des Kochfelds als Anlass verwendet werden, z.B. einen automatisierten Gar- bzw. Kochprozess für diese Kochstelle auszuführen. Hierdurch kann dieser automatisierte Gar- bzw. Kochprozess vom Benutzer durch die einmalige Betätigung des Betätigungselements des Kochgeschirrs ausgelöst werden.

Dabei kann das erfindungsgemäße Verfahren dadurch normgerecht unter Vermeidung einer Fernwirkung umgesetzt werden, dass seitens der Kochstelle eine induktive Leistung als ausgesendetes Signal des Pairing verwendet werden, dessen Empfang durch das Kochgeschirr erst dessen Aussenden des zweiten Signals auslöst. Denn dadurch, dass die induktive Leistung der Kochstelle nur bei direktem Kontakt bzw. bei einem maximalen Abstand von ca. 5 cm zwischen der Kochstelle bzw. dessen Spule und dem Kochgeschirr von dem Kochgeschirr aufgenommen werden kann, kann das Pairing lediglich erfolgreich sein, falls diese Rahmenbedingung eingehalten ist. Ansonsten findet kein Pairing statt und der automatisierte Gar- bzw. Kochprozess wird nicht gestartet.

Die induktive Leistung, welche von der Kochstelle bzw. dessen Spule für das Pairing verwendet wird, liegt vorzugsweise in einem Bereich deutlich unterhalb der normalen Betriebsleistung, ist jedoch ausreichend, um das Aussenden des zweiten Signals durch das Kochgeschirr zu veranlassen.

Vorzugsweise wird gleichzeitig die erforderliche elektrische Energie für das Aussenden des zweiten Signals durch das Kochgeschirr durch die induktive Leistung der Kochstelle bereitgestellt, so dass hierfür keine elektrische Energie durch das Kochgeschirr zur Verfügung gestellt werden muss. Hierdurch kann auf elektrische Energiespeicher des Kochgeschirrs verzichtet werden, was den Aufwand des Kochgeschirrs und damit dessen Kosten reduzieren kann. Auch kann darauf verzichtet werden, z.B. einen Akkumulator des Kochgeschirrs zusätzlich z.B. induktiv aufladen zu müssen, um das erfindungsgemäße Verfahren betreiben zu können. Ebenso kann auf Batterien des Kochgeschirrs verzichtet werden, welche regelmäßig ausgetauscht werden müssten. Ferner müsste für den Austausch der Batterien eine Öffnung im Kochgeschirr vorgesehen werden; dies könnte die Möglichkeit einschränken oder verhindern, dass Kochgeschirr z.B. in einer Geschirrspülmaschine reinigen zu können. Mit anderen Worten kann durch die Bereitstellung der elektrischen Energie, welche zum Aussenden des zweiten Signals des Kochgeschirrs erforderlich ist, durch induktive Übertragung von der Kochstelle auf zusätzlichen Aufwand und auf zusätzliche Kosten des Kochgeschirrs verzichtet und dieses z.B. spülmaschinengeeignet ausgebildet werden.

Die vorbestimmte Zeitdauer, der ersten vorbestimmten Leistung seitens der Kochstelle, ist vorzugsweise kürzer als 50 ms, besonders vorzugsweise kürzer als 10 ms. Ganz besonders vorzugsweise liegt die vorbestimmte Zeitdauer im Bereich von 0,1 ms und 2,0 ms. Hierdurch kann das Pairing möglichst schnell durchgeführt werden, um den Benutzer möglichst kurz auf den Start des Automatikprogramms warten zu lassen.

Das komplette Pairing, also die Betätigung am Kocher, der Empfang und die Auswertung des so erzeugten Signals, die darauf folgende sequentielle Beaufschlagung aller Kochzonen mit der ersten vorbestimmten, niedrigen Leistung und das hierdurch ausgelöste Senden eines Signals zurück ans Kochfeld, sowie das Empfangen und Auswerten des zweiten Signals kann mehrere Sekunden dauern. Weniger als 10s, wahrscheinlich weniger als 5s bis dann eine Beaufschlagung der Spule mit einer höheren, der zweiten vorbestimmten Leistung beginnt.

Das Aussenden des ersten Signals von dem Kochgeschirr an das Kochfeld sowie das Empfangen dort kann vorzugsweise drahtlos z.B. mittels Funk wie z.B. bei einer Frequenz von 868 MHz oder mittels Bluetooth erfolgen. Es ist jedoch auch eine Kommunikation über Infrarotstrahlung oder dergleichen möglich.

Das erste Signal kann eine Identifikation des Kochgeschirrs oder Kochgeschirrtyps aufweisen, wie weiter unten noch näher beschrieben werden wird. Alternativ oder zusätzlich kann das erste Signal eine Anforderung für ein bestimmtes Verfahren oder für eine bestimmte induktive Leistung, eine bestimmte Temperatur sowie weitere Schalterzustände aufweisen.

Vorzugsweise wird die Energieversorgung zur Übermittelung des ersten Signals durch Energy Harvesting wie z.B. durch das Betätigen des Betätigungselements durch den Benutzer erzeugt. Alternativ kann diese elektrische Energie jedoch auch mittels einer Batterie, vorzugsweise mit langer Lebensdauer, und bzw. oder durch einen Akkumulator bereitgestellt werden, um einen Austausch der Batterie überflüssig zu machen und das Kochgeschirr wassergeschützt aufzubauen. Passende Energy-Harvesting-Bauteile werden beispielsweise von der Fa. enocean vertrieben. Laut Spezifikation benötigen diese Bauteile zum Senden einen externen Impuls von etwa 5V bis 6V für eine Zeit von etwa 10 ms. Als Betätigungselement kann z.B. ein Schalter oder ein Taster verwendet werden, welcher zwischen zwei Stellungen durch Drücken, Kippen, Drehen oder Schieben hin und her bewegt werden kann. Die Überführung von der einen Stellung in die andere Stellung kann durch den Benutzer erfolgen. Der Übergang in der umgekehrten Richtung kann ebenfalls vom Benutzer oder durch z.B. einen Temperatursensor und vorzugsweise durch einen Temperaturschalter, beispielsweise einen Bimetall-Schalter erfolgen, wie weiter unten noch beschrieben werden wird.

Erfindungsgemäß weist das Verfahren den weiteren Schritt auf:
- induktives Betreiben der ersten Kochstelle des Kochfelds mit einer zweiten vorbestimmten Leistung in Abhängigkeit der Auswertung des empfangenen zweiten Signals,
wobei die zweite vorbestimmte Leistung größer als die erste vorbestimmte Leistung ist. Hierdurch kann in Reaktion auf das erfolgreiche Pairing von Kochstelle und Kochgeschirr ein automatisierter Gar- bzw. Kochprozess für diese Kochstelle gestartet werden, welcher eine entsprechend stärkere induktive Leistung als das Pairing aufweist.

Die mittlere Induktorleistung bei Benutzung im Leistungsbetrieb, also die zweite vorbestimmte Leistung, beträgt 2 kW bis 4 kW, vorzugsweise jedoch 2,8 kW bis 3.5 kW, wobei sich für den Leistungsbetrieb eine mittlere Induktorleistung von annähernd 3,2 kW als besonders geeignet erwiesen hat. In einem vergleichbaren Zeitintervall ist die für ein Pairing, insbesondere für den Ping erzeugte mittlere Leistung, also die erste vorbestimmte Leistung, kleiner 20 mW, vorzugsweise in einem Bereich von 5 mW bis 10 mW, insbesondere 8 mW.

Die induzierbare Leistung ist zwar abhängig von der verwendeten Sekundärspule, das Verhältnis der ersten vorbestimmten Leistung zur zweiten vorbestimmten Leistung ist jedoch unabhängig von der verwendeten Sekundärspule und ist bevorzugt 1:400.000. Auch andere Verhältnisse sind möglich wobei für die vorgesehene Anwendung das Verhältnis zwischen erster und zweiter vorbestimmter Leistung sinnvoll aus dem Bereich von 1:150.000 bis 1:800.000 gewählt ist.

Gemäß einem weiteren Aspekt der vorliegenden Erfindung kann die Identifikation des Kochgeschirrs oder Kochgeschirrtyps eine Information oder Kennung über die Aufsetzgröße, insbesondere die induktiv beeinflussbare Fläche des Kochgeschirrs, enthalten. Die Aufsetzgröße kann also mit der Identifikation übermittelt oder in dem Kochgeschirrtyp enthalten dem Kochfeld vorliegen. Durch einen Vergleich der Aufsetzgröße mit der momentanen Belegung der Primärspulen, deren Anzahl und Größe dem Kochfeld vorliegen, ist es möglich das Kochgeschirr an sich und/oder die in das Kochgeschirr eingetragene Leistung zu validieren.

Gemäß einem weiteren Aspekt der vorliegenden Erfindung weist das Kochgeschirr ferner wenigstens einen Temperatursensor, vorzugsweise einen Bimetall-Schalter, auf, welcher ausgebildet ist, mittels des Betätigungselements durch den Benutzer betätigt zu werden und bei Erreichen einer vorbestimmten Temperatur die Betätigung des Betätigungselements des Kochgeschirrs aufzuheben oder das Betätigungselement des Kochgeschirrs erneut zu betätigen, wobei das Verfahren ferner die weiteren Schritte aufweist:
- Aussenden eines dritten Signals von der Sendeeinheit des Kochgeschirrs beim Aufheben der Betätigung oder bei erneutem Betätigen des Betätigungselements des Kochgeschirrs durch den Temperatursensor,
- Empfangen des dritten Signals durch die Empfangseinheit des Kochfelds,
- Auswerten des empfangenen dritten Signals durch das Kochfeld, und
- Verändern, vorzugsweise Beenden, des induktiven Betriebs der ersten Kochstelle des Kochfelds.

Hierdurch kann seitens des Kochgeschirrs über dessen Temperatursensor der Gar- bzw. Kochprozess selbsttätig verändert und insbesondere beendet werden, indem der Temperatursensor bei Erreichen einer vorbestimmten Temperatur auslöst und hierdurch die vom Benutzer durchgeführte Betätigung des Betätigungselements wieder aufhebt oder das Betätigungselement erneut betätigt. Dies kann das Aussenden eines dritten Signals vom Kochgeschirr an die Kochstelle auslösen, welches dort empfangen und ausgewertet werden kann. Das Ergebnis dieser Auswertung kann sein, dass z.B. die induktive Leistung verändert und insbesondere reduziert wird. Insbesondere kann der Gar- bzw. Kochprozess beendet werden, weil die gewünschte Temperatur des Garguts im Kochgeschirr erreicht wurde.

Vorzugsweise wird als Temperatursensor ein Bimetall-Schalter verwendet, welcher durch den Benutzer durch die Betätigung des Betätigungselements verformt und hierdurch gespannt werden kann. Löst sich diese Spannung bei Erreichen einer vorbestimmten Temperatur des Garguts wieder, so geht der Bimetall-Schalter wieder in seine Ausgangsstellung zurück. Hierdurch wird die Betätigung des Bimetall-Schalters selbsttätig wieder aufgehoben. Dies kann reproduzierbar erfolgen. Ferner ist für diese Funktion keine Versorgung mit elektrischer Energie sowie eine Schaltungselektronik oder dergleichen erforderlich, was die Umsetzung dieser Funktion einfach, günstig, unabhängig und bzw. oder robust machen kann.

Die Temperatur kann auch mit in dem übertragenen Signal enthalten sein. Die ausführung des Temperatursensors als Temperaturschalter, vorzugsweise Bimetall-Schalters stellt einen einfachen Temperatursensor bereit, welcher lediglich das Überschreiten eines Schwellenwertes und das Unteraschreiten eines, möglicherweise anderen Schwellenwertes erfassen kann.

Gemäß einem weiteren Aspekt der vorliegenden Erfindung weist das Kochgeschirr ferner wenigstens einen elektrischen Generator auf, welcher ausgebildet ist, unabhängig vom Temperatursensor oder gemeinsam mit einem als Temperaturschalter ausgeführten Temperatusensor mittels des Betätigungselements durch den Benutzer betätigt zu werden, wobei der elektrische Generator ferner ausgebildet ist, durch seine Betätigung die elektrische Energie für das Aussenden des ersten Signals, vorzugsweise und für das Aussenden des dritten Signals, von der Sendeeinheit des Kochgeschirrs zu erzeugen. Hierdurch kann durch das Betätigen des Betätigungselements durch den Benutzer nicht nur das Aussenden eines Signals veranlasst, sondern gleichzeitig die hierzu erforderliche elektrische Energie erzeugt werden, so dass hierfür auf elektrische Energiespeicher des Kochgeschirrs verzichtet werden kann.

Gemäß einem weiteren Aspekt der vorliegenden Erfindung weist das Kochgeschirr ferner wenigstens eine Leiterschleife, vorzugsweise eine Mehrzahl von Leiterschleifen, auf, welche ausgebildet ist, die erste vorbestimmte induktive Leistung von der ersten Kochstelle des Kochfelds zu empfangen, wobei die Leiterschleife ferner ausgebildet ist, durch das Aufnehmen der ersten vorbestimmten induktiven Leistung die elektrische Energie für das Aussenden des zweiten Signals von der Sendeeinheit des Kochgeschirrs zu erzeugen. Auf diese Art und Weise kann die elektrische Energie, die für das Aussenden des zweiten Signals erforderlich ist, auf das Kochgeschirr übertragen werden, so dass diese nicht seitens des Kochgeschirrs z.B. über elektrische Energiespeicher zur Verfügung gestellt werden muss.

Die Leiterschleife kann bzw. die Leiterschleifen können im Körper des Kochgeschirrs oder außen an dem Körper des Kochgeschirrs, d.h. im Randbereich des Bodens des Kochgeschirrs, nahe der Kochstelle angeordnet und der Kochstelle zugewandt sein, um möglichst gut und verlustfrei eine induktive Leistung von dort zu erhalten. Durch das magnetische Wechselfeld der Spule der ersten Kochstelle kann somit in der Leiterschleife des Kochgeschirrs ein Strom induziert werden. Die Leiterschleife des Kochgeschirrs kann auf diese Art und Weise einer kontinuierlichen Energieversorgung insbesondere der Sendeeinheit im Falle eines vorhandenen magnetischen Wechselfelds dienen.

Die Leiterschleife kann bzw. die Leiterschleifen können vergleichsweise klein ausgebildet sein. Sind mehrere Leiterschleifen vorhanden, haben diese vergleichsweise wenige Windungen, d.h. vorzugsweise weniger als 20 Windungen, besonders vorzugsweise zwischen 5 und 10 Windungen. Die Drahtlänge beträgt vorzugsweise weniger als 200 cm, besonders vorzugsweise weniger als 150 cm, ganz besonders vorzugsweise zwischen 80 cm und 120 cm. Der Durchmesser der Leiterschleife bzw. der Leiterschleifen beträgt vorzugsweise 70 mm.

Gemäß einem weiteren Aspekt der vorliegenden Erfindung ist das Kochfeld ausgebildet, durch das Empfangen des ersten Signals aus einem Ruhe-Modus in einen Betriebsmodus versetzt zu werden. Hierdurch kann es vermieden werden, dass das Kochfeld zusätzlich durch den Benutzer in den Betriebsmodus versetzt werden muss, was einen zusätzlichen Aufwand darstellen würde. Ferner kann ein Ruhe-Modus eingenommen werden, welcher üblicherweise zu einem geringeren Verbrauch elektrischer Energie führt, so dass das Kochfeld unmittelbar bis zum Beginn des erfindungsgemäßen Verfahrens möglichst energiesparend betrieben werden kann.

Gemäß einem weiteren Aspekt der vorliegenden Erfindung weist das Kochfeld neben der ersten Kochstelle noch wenigstens eine weitere Kochstelle auf und der Schritt des induktiven Betreibens wird für jede Kochstelle des Kochfelds mit der ersten vorbestimmten Leistung für den vorbestimmten Zeitraum in Abhängigkeit der Auswertung des empfangenen ersten Signals betrieben, bis das zweite Signal durch die Empfangseinheit des Kochfelds empfangen wird. Auf diese Art und Weise können die einzelnen Kochstellen des Kochfelds durchgeprüft werden, auf welcher Kochstelle sich das Kochgeschirr befindet, welches mittels Pairing identifiziert werden soll. Hierdurch können Benutzerhandlungen oder sonstige Maßnahmen, welche zu dieser Information führen könnten, unterlassen werden.

Gemäß einem weiteren Aspekt der vorliegenden Erfindung wird der Schritt des induktiven Betreibens für jede Kochstelle des Kochfelds mit der ersten vorbestimmten Leistung für den vorbestimmten Zeitraum in Abhängigkeit der Auswertung des empfangenen ersten Signals parallel oder sequentiell ausgeführt.

Durch ein paralleles Pairing mehrerer Kochstellen kann Zeit gespart werden, jedoch muss eine Unterscheidung der Kochstelle, auf der sich das Kochgeschirr befindet, von den übrigen Kochstellen gewährleistet werden. Dies kann dadurch erfolgen, dass die Wechselwirkung berücksichtigt wird, welche auf die Spule der Kochstelle wirkt, wenn von der Spule induktive Leistung an ein sich dort befindendes Kochgeschirr abgegeben wird; dies ist lediglich für die Kochstelle der Fall, auf der sich das Kochgeschirr befindet, wohingegen alle anderen Kochstellen diese Wechselwirkung nicht aufweisen. Mit anderen Worten wird die Beeinflussung des Schwingkreises der Spule der Kochstelle durch das Kochgeschirr von dem Kochfeld erkannt.

Werden die Kochstellen nacheinander einem Pairing unterzogen, kann auf diese Maßnahme verzichtet werden. Eine Identifikation derjenigen Kochstelle, auf welcher das Kochgeschirr angeordnet ist, erfolgt dann z.B. dadurch, dass nach dem Betreiben einer Kochstelle mit der ersten elektrischen Leistung eine vorbestimmte Zeitdauer auf das Empfangen des zweiten Signals gewartet wird. Wird das zweite Signal von dem Kochfeld innerhalb dieser Zeitdauer nicht empfangen, kann diese Kochstelle ausgeschlossen werden und es wird die nächste Kochstelle betrachtet.

Gemäß einem weiteren Schritt der vorliegenden Erfindung erfolgen die Schritte
- des induktiven Betreibens der ersten Kochstelle des Kochfelds mit der ersten vorbestimmten Leistung für den vorbestimmten Zeitraum in Abhängigkeit der Auswertung des empfangenen ersten Signals,
- ggfs. des Aufnehmens der ersten vorbestimmten induktiven Leistung durch die Leiterschleife des Kochgeschirrs,
- des Aussendens des zweiten Signals von der Sendeeinheit des Kochgeschirrs bei induktiver Versorgung des Kochgeschirrs durch die erste Kochstelle,
- des Empfangens des zweiten Signals durch die Empfangseinheit des Kochfelds und
- des Auswertens des empfangenen zweiten Signals durch das Kochfeld
wiederholend, wobei bei Ausbleiben des Empfangens des zweiten Signals durch die Empfangseinheit des Kochfelds der Schritt erfolgt:
- Verändern, vorzugsweise Beenden, des induktiven Betriebs der ersten Kochstelle des Kochfelds.

Nachdem anfänglich ein sicheres Pairing ausgeführt wird, um z.B. einen automatisierten Gar- bzw. Kochprozess zu starten, kann auf diese Art und Weise die hierzu erforderlichen zuvor beschriebenen Schritte regelmäßig wiederholt werden, um sicherzustellen, dass sich das Kochgeschirr weiterhin auf dieser Kochstelle befindet. Andernfalls kann ein Verändern des induktiven Betriebs wie insbesondere ein Beenden des induktiven Betriebs erfolgen.

Gemäß einem weiteren Aspekt der vorliegenden Erfindung erfolgt der Schritt des Veränderns, vorzugsweise des Beendens, des induktiven Betriebs der ersten Kochstelle des Kochfelds nach einer vorbestimmten zeitlichen Verzögerung. Hierdurch kann vermieden werden, dass ein kurzzeitiges Entfernen des Kochgeschirrs durch den Benutzer, um z.B. einen Inhalt des Kochgeschirrs abzugießen, zu einem Verändern und insbesondere zu einem Beenden des z.B. automatisierten Gar- bzw. Kochprozesses führt. Beispielsweise kann ein kurzzeitiges Entfernen des Kochgeschirrs für z.B. fünf Sekunden toleriert werden.

Gemäß einem weiteren Aspekt der vorliegenden Erfindung erfolgt bei erneutem Betätigen des Betätigungselements des Kochgeschirrs durch den Benutzer der Schritt:
- Verändern, vorzugsweise Beenden, des induktiven Betriebs der ersten Kochstelle des Kochfelds.

Hierdurch kann der z.B. automatisierte Gar- bzw. Kochprozess vom Benutzer über dasselbe Betätigungselement verändert und insbesondere wieder beendet werden, über welchen der Prozess gestartet wird. Dies kann für den Benutzer sehr einfach und intuitiv in der Bedienung sein. Ferner können zusätzlich Betätigungselemente und dergleichen gespart werden.

Gemäß einem weiteren Aspekt der vorliegenden Erfindung weisen wenigstens das erste Signal des Kochgeschirrs und das zweite Signal des Kochgeschirrs, vorzugsweise ferner das dritte Signal des Kochgeschirrs, eine Identifikation des Kochgeschirrs und bzw. oder des Kochgeschirrtyps auf. Hierdurch kann das Kochfeld erkennen, dass ein Pairing ausgelöst werden soll und den hierzu erforderlichen nächsten Schritt seinerseits durchführen. Dabei kann ein Kochgeschirr über seine individuelle Identifikation erkannt und auch in dem Fall wiedererkannt werden, falls das Kochgeschirr während des Betriebs von der Kochstelle entfernt und wieder zurück auf die Kochstelle gestellt wird. Auch ein Verschieben eines bestimmten Kochgeschirrs auf eine andere Kochstelle kann hierdurch erkannt werden, um den auf der ersten Kochstelle begonnenen Kochprozess auf der zweiten Kochstelle fortzuführen. Wird lediglich der Kochgeschirrtyp über die Identifikation mitgeteilt, so kann dies ausreichend sein, um ein Pairing und einen bestimmten automatisierten Betrieb auszuführen, ohne dass der Benutzer weiter tätig werden muss.

Die vorliegende Erfindung betrifft auch ein induktives Kochsystem mit einem Kochfeld mit wenigstens einer ersten Kochstelle und mit wenigstens einer Empfangseinheit und mit wenigstens einem Kochgeschirr mit wenigstens einem Betätigungselement und mit wenigstens einer Sendeeinheit, wobei das Kochfeld und das Kochgeschirr ausgebildet sind, ein Verfahren wie zuvor beschrieben auszuführen. Hierdurch kann ein induktives Kochsystem bereitgestellt werden, mittels dessen das zuvor beschriebene Verfahren umgesetzt und genutzt werden kann.

Möglich ist auch ein Kochfeld zur Verwendung in einem induktiven Kochsystem wie zuvor beschrieben mit wenigstens einer ersten Kochstelle und mit wenigstens einer Empfangseinheit. Hierdurch kann ein Kochfeld bereitgestellt werden, um ein induktives Kochsystem wie zuvor beschrieben umzusetzen.

Möglich ist auch ein Kochgeschirr zur Verwendung in einem induktiven Kochsystem wie zuvor beschrieben mit wenigstens einem Betätigungselement und mit wenigstens einer Sendeeinheit. Hierdurch kann ein Kochgeschirr bereitgestellt werden, um ein induktives Kochsystem wie zuvor beschrieben umzusetzen. Das Kochgeschirr kann vorzugsweise ein Kochgeschirr und insbesondere ein Wasserkocher sein.

Mit anderen Worten kann durch die Betätigung des Schalters am Wasserkocher ein Bimetall im oberen Bereich des Wasserkochers gespannt werden. Gleichzeitig kann durch die Betätigung ein Spannungsimpuls generiert und ein einmaliges Signal gesendet werden. Dadurch kann das Kochfeld aus dem Stand-By erwachen, so als würde die Ein-Aus-Taste am Kochfeld betätigt. Hierdurch wird grundsätzlich weder eine Kochstelle ausgewählt noch eine Leistung abgegeben. Das Kochfeld befindet sich in dem gleichen sicheren Zustand, wie auch z.B. bei einem versehentlich abgelegten Gegenstand auf dem Schalter des Kochfelds. Wenn innerhalb einer vorgegebenen Zeit von z.B. drei Sekunden keine weitere Eingabe erfolgt, kann sich das Kochfeld wieder automatisch ausschalten.

Durch das Aufwecken kann das Kochfeld serienmäßig zunächst mit der Topferkennung, d.h. mit der Erkennung des Kochgeschirrs wie z.B. des Wasserkochers, starten. Hierbei werden für wenige Millisekunden die Kochstellen mit einer geringen Leistung beaufschlagt. Vorzugsweise geschieht diese Beaufschlagung der Kochzonen bzw. Spulen nacheinander. Der kurze Impuls von wenigen Millisekunden induziert in der Leiterschleife des Wasserkochers bereits den notwendigen kurzen Spannungspuls, um ein weiteres Signal vom Wasserkocher an das Kochfeld zu senden. Das Kochfeld kann also durch die sequentielle Topferkennung und das erneute Empfangen eines Signals die korrekte Position des Wasserkochers auffinden und durch eine ID im Funksignal sicherstellen, dass es genau der Wasserkocher sein muss, der auch das Signal zum Aufwachen gesendet hat.

Erst nach diesem "Pairing" kann das Kochfeld die erhöhte Leistung zum Aufkochen abgeben. Während des gesamten weiteren Prozesses kann dabei durch den induzierten Strom in der Leiterschleife des Wasserkochers ein zyklisches Funksignal gesendet werden (keep alive). Wird der Kocher mehr als z.B. etwa 5 cm entfernt, kann das magnetische Wechselfeld des Kochfelds zu gering sein, so dass kein Strom mehr induziert und entsprechend auch kein Signal mehr gesendet wird. Das Kochfeld kann die Leistung abschalten.

Wird der Kochpunkt erreicht, kann das gespannte Bimetall wieder in seine Ausgangsposition zurückklappen. Auch der Schalter kann dadurch wieder in seine Ausgangsposition gelangen und dabei erneut den Generator betätigen, wodurch ein weiteres Funksignal erzeugt werden kann. Dieses Funksignal kann sich von dem ersten Signal unterscheiden und daher zum Abschalten des Kochfelds genutzt werden.

Anstelle des mechanischen Ansatzes mittels eines Temperaturschalters wie einem Bimetall kann auch ein Temperatursensor oder Temperaturfühler verbaut werden, wobei das Funksignal entsprechend der vom Temperatursensor erfassten Eigenschaften modifiziert ist. Das Signal (mit Temperatur) kann dann vom Kochfeld interpretiert werden.

Um die Benutzerfreundlichkeit zu erhöhen, kann auch die Interpretation der Topferkennung mit genutzt werden. Wird beispielsweise während des Prozesses der Wasserkocher kurz entfernt (über Topferkennung und Ausbleiben des Funksignals detektierbar), kann es sinnvoll sein, den Prozess nach erneutem Aufsetzen auf die Kochzone fortlaufen zu lassen, da der Benutzer Wasser abgegossen oder aufgefüllt haben kann. Auch ein Verschieben von einer Kochzone auf eine andere kann derart interpretiert werden, dass der Prozess weitergeführt werden soll.

Der Wasserkocher kann auf dem Induktionskochfeld mit einer höheren Leistung betrieben werden als bisherige Wasserkocher mit eigener Betriebsstation. Auf dem Markt erhältliche Wasserkocher bieten eine Leistung von etwa 1.700 W bis 2.100 W. Ein erfindungsgemäßer Systemwasserkocher für ein Induktionskochfeld kann deutlich über 3.000 W zum Erwärmen des Wassers umsetzen.

Da in dem Wasserkocher vorzugsweise keine Batterie verbaut ist, kann die vorhandene Elektronik derart umschlossen sein, dass der Wasserkocher spülmaschinenfest ausgebildet werden kann.

Durch das 1-Klick-Einschalten des Wasserkochers kann eine Bedienung am Kochgeschirr geschaffen werden, mit der auch weitere Umsetzungen an Topf und Pfanne möglich werden.

Bei dem erfindungsgemäßen Verfahren kann ferner unterschieden werden, welchen Status bzw. welchen Betriebszustand das Kochfeld aufweist, wenn das Kochgeschirr vom Benutzer auf die Kochstelle gestellt und das Betätigungselement betätigt wird:
Befindet sich das Kochfeld in einer Anschaltbereitschaft, d.h. in einem Stand-By-Betrieb, so kann das Verfahren wie zuvor beschrieben ablaufen.

Ist das Kochfeld bereits aktiviert, jedoch keine Kochstelle ist in Betrieb, so kann das Kochfeld kontinuierlich eine parallele oder eine sequentielle Topferkennung, vorzugsweise wie zuvor beschrieben, ausführen. Wird dabei, vorzugsweise innerhalb einer vorbestimmten Zeitdauer, kein Topf erkannt, so kann sich das Kochfeld wieder ausschalten bzw. in den Stand-By-Betrieb zurückgehen.

Bei Erkennen eines induktionsfähigen Topfes kann das zugehörige Bedienfeld bereitgestellt werden; die Auswahl einer Leistungsstufe ist möglich. Durch den Energieimpuls der Topferkennung kann der Kessel seine ID (Identifikation) senden. Das Kochfeld erkennt, dass ein erfindungsgemäßer Kessel aufgestellt ist. Bei einer sequentiellen Topferkennung erkennt das Kochfeld auch, wo der Kessel steht. In diesem Fall können, bei einer parallelen Topferkennung dort, wo ein induktionsfähiger Topf erkannt wurde, die entsprechenden Bedienflächen mit Leistungssträngen bereitgestellt werden. Alternativ kann ein Warten auf eine Bedieneingabe (Auswahl einer Leistungsstufe oder Knopf am Kessel) erfolgen.

Bei einer parallelen Topferkennung ist folgender Zwischenschritt erforderlich: Wenn jetzt nur eine Kochstelle belegt ist, kann der Kessel zugeordnet werden. Sind mehrere Kochstellen belegt (zwei Töpfe gleichzeitig aufgestellt), werden (nur) die entsprechenden Bedienflächen mit Leistungssträngen bereitgestellt.

Ohne Bedieneingabe kann sich das Kochfeld nach einem vorgegebenen Zeitablauf wieder ausschalten bzw. in den Stand-By-Betrieb zurückgehen.

Bei Auswahl einer Leistungsstufe kann der Kessel wie ein normaler Topf betrieben werden.

Ist das Kochfeld bereits aktiviert und ist wenigstens eine Kochstelle in Betrieb, so kann das Kochfeld kontinuierlich eine parallele oder eine sequentielle Topferkennung, vorzugsweise wie zuvor beschrieben, ausführen. Bei Erkennen eines induktionsfähigen Topfes wird das zugehörige Bedienfeld bereitgestellt, wie bereits zuvor beschrieben.

In diesem Fall ist bei einer parallelen Topferkennung folgender Zwischenschritt erforderlich: Ist in einem Vorher/Nachher-Vergleich der belegten Spulen nur eine weitere Kochstelle neu belegt worden, dann kann der Kessel zugeordnet werden. Sind mehrere Kochstellen gleichzeitig neu belegt worden (zwei Töpfe gleichzeitig aufgestellt), werden (nur) die entsprechenden Bedienflächen mit Leistungssträngen bereitgestellt.

Wird in jedem Fall nun das Betätigungselement durch den Benutzer betätigt, werden bei bereits erkannter Zuordnung von Kochstelle und Kessel (Pairing erfolgreich initial abgeschlossen) nach Betätigung des Knopfes die übrigen Schritte des erfindungsgemäßen Verfahrens durchgeführt, wobei ggfs. die dauerhafte Anwesenheit des Kochgeschirrs auf der Kochstelle durch ein sich wiederholendes Pairing überprüft und bestätigt werden kann. Ist der Kessel noch nicht sicher einer Kochstelle zugeordnet, ist das erfindungsgemäße Verfahren vollständig durchzuführen.

Ein Ausführungsbeispiel und weitere Vorteile der Erfindung werden nachstehend im Zusammenhang mit den folgenden Figuren erläutert. Darin zeigt:
- Figur 1: eine schematische Darstellung eines erfindungsgemäßen induktiven Kochsystems mit einem erfindungsgemäßen Kochfeld und einem erfindungsgemäßen Kochgeschirr;

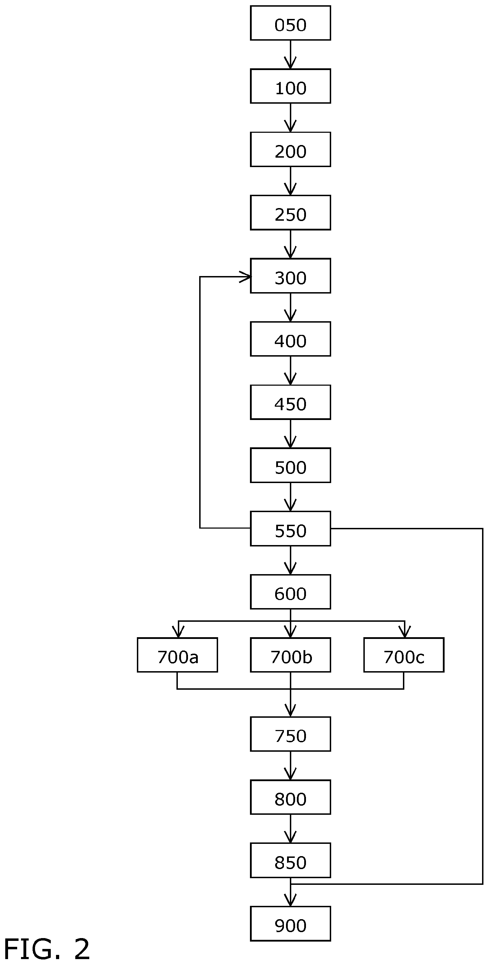

- Figur 2: ein Ablaufdiagramm eines erfindungsgemäßen Verfahrens zum Betrieb eines erfindungsgemäßen induktiven Kochsystems;

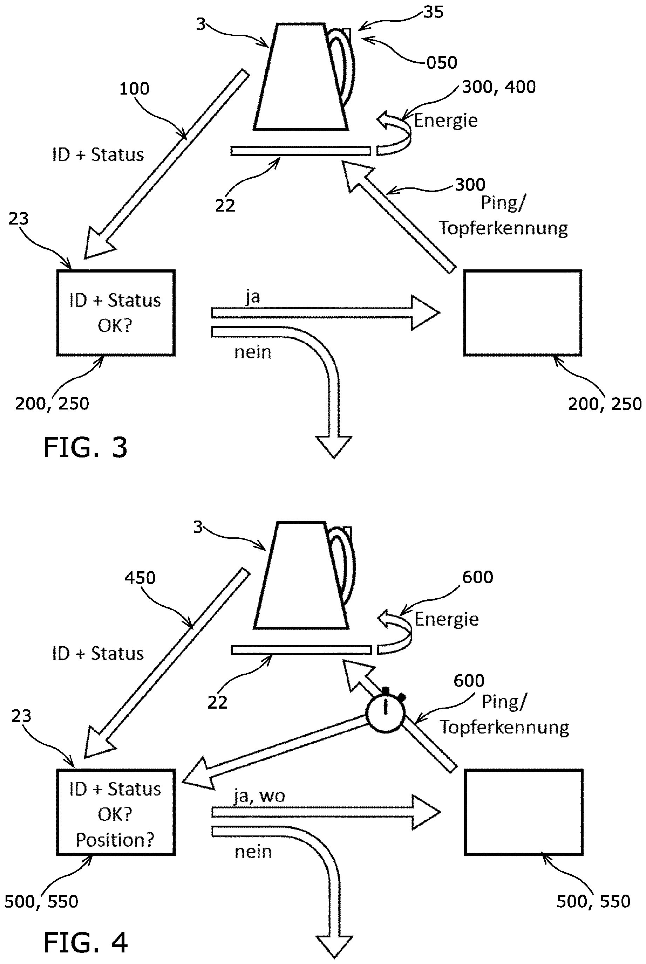

- Figur 3: eine alternative Darstellung eines ersten Teils des erfindungsgemäßen Verfahrens der Figur 2;
- Figur 4: eine alternative Darstellung eines zweiten Teils des erfindungsgemäßen Verfahrens der Figur 2; und
- Figur 5: eine Tabelle zur Erläuterung eines 2-Bit-Signalmusters.

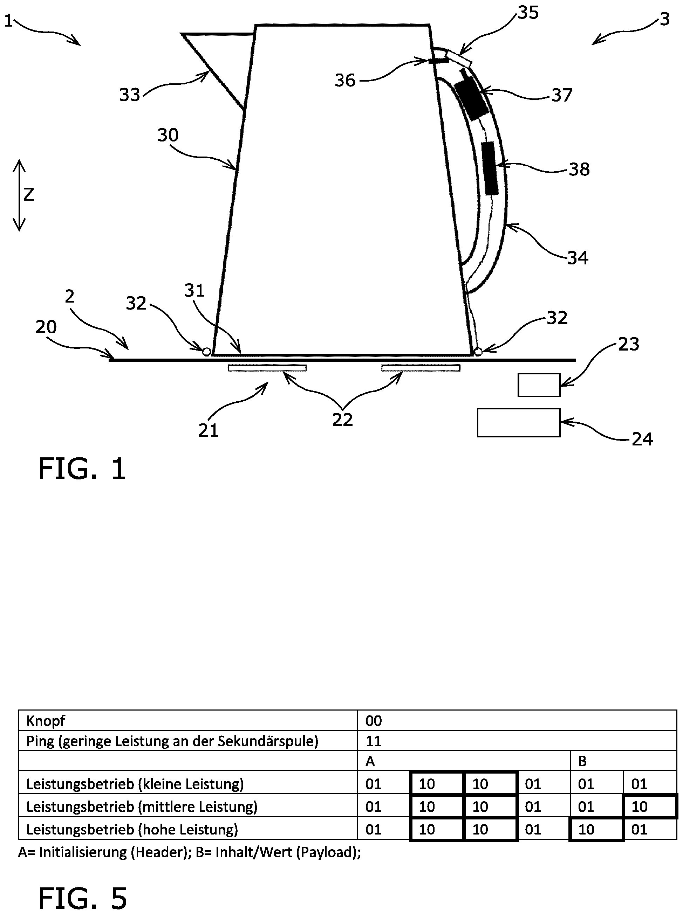

Figur 1 zeigt eine schematische Darstellung eines erfindungsgemäßen induktiven Kochsystems 1 mit einem erfindungsgemäßen Kochfeld 2 und einem erfindungsgemäßen Kochgeschirr 3. Die Figur 1 wird in kartesischen Koordinaten betrachtet. Es erstreckt sich eine Längsrichtung X (nicht dargestellt), welche auch als Tiefe X bezeichnet werden kann. Senkrecht zur Längsrichtung X erstreckt sich eine Querrichtung Y (nicht dargestellt), welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

Das Kochfeld 2 weist eine Glaskeramikplatte 20 auf, welche die Oberfläche des Kochfelds 2 darstellt, auf der Kochgeschirre 3 aufgesetzt und verwendet werden können. Ein Bereich der Glaskeramikplatte 20 bildet eine erste Kochstelle 21, wobei weitere Kochstellen vorhanden jedoch nicht dargestellt sind. Im Bereich der ersten Kochstelle 21 ist eine Spule 22 unterhalb der Glaskeramikplatte 20 angeordnet, welche die Spule 22 der ersten Kochstelle 21 darstellt. Das Kochfeld 2 weist ferner eine drahtlose Empfangseinheit 23 sowie eine Steuerungseinheit 24 auf. Die Steuerungseinheit 24 ist ausgebildet, das erfindungsgemäße Verfahren auszuführen. Die Steuerungseinheit 24 ist signalübertragend sowohl mit der Spule 22 der ersten Kochstelle 21 als auch mit der Empfangseinheit 23 verbunden, so dass Signale von der Empfangseinheit 23 drahtlos empfangen und an die Steuerungseinheit 24 übermittelt werden können. Seitens der Steuerungseinheit 24 kann die Spule 22 der ersten Kochstelle 21 gesteuert und geregelt werden. Ferner können Informationen von der Spule 22 der ersten Kochstelle 21 an die Steuerungseinheit 24 übermittelt werden. Ebenso können Eigenschaften der Spule 22 der ersten Kochstelle 21 wie z.B. eine Spannung und bzw. oder ein Strom von der Steuerungseinheit 24 erfasst werden.

Das Kochgeschirr 3 ist in diesem Ausführungsbeispiel als Wasserkocher 3 ausgebildet, welcher zur induktiven Erwärmung auf einer Kochstelle 21 eines Kochfelds 2 verwendet werden kann. Der Wasserkocher 3 weist einen Kochgeschirrkörper 30 mit einem Boden 31 auf, wobei der Boden 31 des Kochgeschirrkörpers 30 auf der ersten Kochstelle 21 des Kochfelds 2 aufsteht. Der Boden 31 des Kochgeschirrkörpers 30 ist aus einem ferromagnetischen Material derart ausgebildet, dass der Boden 31 des Kochgeschirrkörpers 30 von der Spule 22 der ersten Kochstelle 21 induktiv erwärmt werden kann. Hierdurch kann z.B. Wasser innerhalb des Kochgeschirrkörpers 30 erwärmt und zum Kochen gebracht werden. Das Wasser kann über einen Auslass 33 des Kochgeschirrkörpers 30 ausgegossen werden. Der Wasserkocher 3 kann mittels eines Griffs 34 von einem Benutzer gehandhabt werden. Ein derartiger Wasserkocher 3 ist bekannt.

Erfindungsgemäß weist der Wasserkocher 3 eine Mehrzahl von Leiterschleifen 32 auf, welche am Rand des Bodens 31 des Kochgeschirrkörpers 30 umlaufend angeordnet sind. Ferner weist der erfindungsgemäße Wasserkocher 3 im oberen Bereich seines Griffs 34 ein Betätigungselement 35 in Form eines Druckschalters 35 auf, welcher von einem Benutzer vorzugsweise mittels seines Daumens in den Griff 34 hineingedrückt werden kann. Durch dieses Betätigen wird zum einen ein Temperatursensor 36 in Form eines Bimetall-Schalters 36 gespannt, welcher derart angeordnet ist, dass der Bimetall-Schalter 36 vom Wasser im Inneren des Kochgeschirrkörpers 30 möglichst ohne Zeitverzug erwärmt werden kann.

Zum anderen wird durch das Betätigen des Druckschalters 35 ein elektrischer Generator 37 betätigt, welcher relativ zum Druckschalter 35 dem Bimetall-Schalter 36 gegenüberliegend im Griff 34 angeordnet ist. Mittels des elektrischen Generators 37 kann eine Sendeeinheit 38 betrieben werden, welche ebenfalls im Griff 34 und relativ zum elektrischen Generator 37 dem Druckschalter 35 gegenüberliegend angeordnet ist. Die Sendeeinheit 38 ist ferner mit den Leitschleifen 32 verbunden, um von dort mittels induktiv aufgenommener Leistung betrieben zu werden.

Mittels dieses erfindungsgemäßen Kochsystems kann das folgende erfindungsgemäße Verfahren ausgeführt werden:

Zunächst wird davon ausgegangen, dass ein Benutzer den Wasserkocher 3 als Kochgeschirr 3 auf die erste Kochstelle 21 des Kochfelds 2 aufgesetzt hat. Dann erfolgt in einem ersten Schritt 050 ein Betätigen des Druckschalters 35 als Betätigungselement 35 des Kochgeschirrs 3 durch den Benutzer. Hierdurch wird zum einen in einem zweiten Schritt 100 das Aussenden eines ersten Signals von der Sendeeinheit 38 des Kochgeschirrs an das Kochfeld 2 bewirkt. Gleichzeitig wird in demselben Schritt zum anderen der Bimetall-Schalter 36 gespannt. In einem dritten Schritt 200 wird dann das erste Signal durch die Empfangseinheit 22 des Kochfelds 2 empfangen und in einem vierten Schritt 250 durch das Kochfeld 2 ausgewertet. Im Rahmen dieser Auswertung kann das Kochgeschirr 2 als Wasserkocher 2 erkannt werden, so dass eine hierauf abgestimmte Reaktion wie folgt erfolgen kann.

In einem fünften Schritt 300 wird die erste Kochstelle 21 des Kochfelds 2 mit einer ersten vorbestimmten Leistung für einen vorbestimmten Zeitraum betrieben. Da sich der Wasserkocher 3 tatsächlich auf der ersten Kochstelle 21 des Kochfelds 2 befindet, wird die induktiv von der ersten Kochstelle 21 abgegebene elektrische Leistung über ein elektromagnetisches Wechselfeld in einem sechsten Schritt 400 über die Leiterschleifen 32 des Wasserkochers 3 aufgenommen. Hierdurch wird in dem Wasserkocher 3 zum einen das Aussenden eines zweiten Signals von der Sendeeinheit 38 des Kochgeschirrs 3 in einem siebten Schritt 450 ausgelöst und zum anderen die hierfür erforderliche elektrische Energie zur Verfügung gestellt, so dass der Wasserkocher 3 auf elektrische Energiespeicher verzichten kann.

Das zweite Signal des Wasserkochers 3 wird in einem achten Schritt 500 durch die Empfangseinheit 23 des Kochfelds 2 empfangen und in einem neunten Schritt 550 durch das Kochfeld 2 ausgewertet. Wird hierdurch der Wasserkocher 3 erneut erkannt, kann davon ausgegangen werden, dass sich dieser tatsächlich auf der ersten Kochstelle 21 des Kochfelds 2 befindet, weil nur dann eine induktive Übertragung von elektrischer Energie stattgefunden haben kann. Hierdurch kann eine Fernwirkung ausgeschlossen werden.

Nun kann der Wasserkocher 3 in einem zehnten Schritt 600 induktiv auf der ersten Kochstelle 21 des Kochfelds 2 mit einer zweiten vorbestimmten Leistung betrieben werden, wobei die zweite vorbestimmte Leistung größer als die erste vorbestimmte Leistung ist. Diente die erste Leistung lediglich einem Pairing, so kann nun mit einer entsprechenden Leistung ein Betrieb erfolgen, um das Wasser in dem Wasserkocher 3 zum Kochen zu bringen.

Ist die Kochtemperatur des Wassers in dem Wasserkocher 3 erreicht, hebt sich hierdurch selbsttätig die Spannung des Bimetall-Schalters 36 und damit die Betätigung des Druckschalters 35 in einem elften Schritt 700a auf. Alternativ kann der Druckschalter 35 in einem elften Schritt 700b durch die sich aufhebende Spannung des Bimetall-Schalters 36 erneut betätigt werden. Alternativ kann in dem elften Schritt 700c auch ein erneutes Betätigen des Druckschalters 35 durch den Benutzer erfolgen.

In jedem der drei Fälle erfolgt anschließend in einem zwölften Schritt 750 das Aussenden eines dritten Signals von der Sendeeinheit 38 des Kochgeschirrs 3, welches durch den Druckschalter 35 ausgelöst und mittels des elektrischen Generators 37 elektrisch versorgt wird.

In einem dreizehnten Schritt 800 wird das dritte Signal durch die Empfangseinheit 22 des Kochfelds 2 empfangen und in einem vierzehnten Schritt 850 durch das Kochfeld 2 ausgewertet. In Reaktion hierauf erfolgt in einem abschließenden fünfzehnten Schritt 900 ein Verändern des induktiven Betriebs der ersten Kochstelle 21 des Kochfelds 2 dahingehend, dass dieser Betrieb beendet wird, weil entweder die Kochtemperatur des Wassers im Wasserkocher 3 erreicht ist oder der Kochprozess vom Benutzer beendet wurde.

Figur 5 zeigt eine Tabelle zur Erläuterung eines 2-Bit-Signalmusters. Beim Ping wird in die Sekundärspule 32, d.h. die Leiterschleifen 32 des Wasserkochers 3, eine kleine Leistung induziert. Diese reicht aus, einen kurzzeitigen Sendebetrieb zu ermöglichen. Dabei wird neben der Kessel-ID auch eine Kennung der Energiequelle, d.h. des elektrischen Generators 37, versendet. In diesem Fall ist Energiequellen-Kennung = Ping.

Im Leistungsbetrieb wird eine höhere Leistung in die Sekundärspule 32 induziert. Diese kann unterschiedlich ausfallen, sollte aber stets mit jener, von der Primärspule 22, d.h. der Spule 22 der ersten Kochstelle 21, im Kochfeld 2 abgegebenen Leistung korrelieren. Daher kann im Leistungsbetrieb die Energiequellen-Kennung entsprechend einem empfangenen Leistungsniveau eingestellt werden. So ist es möglich, die im Wasserkocher 3 empfangene Leistung an das Kochfeld 2 zurücksenden bzw. zurückzumelden und in der Steuerungseinheit 24 einen Vergleich vorzunehmen.

Hierdurch wird es möglich, die Funkverbindung im Leistungsbetrieb laufend zu validieren. Insbesondere eine (zeitweise) gezielte Ansteuerung der Primärspule 22 mit unterschiedlichen Leistungen (für wenige Sekunden bis Millisekunden) ist möglich. Alternative Validierungsmöglichkeiten sind gezielte Aussetzer der Primärspule 22 (keine Leistungsabgabe) oder ohne Beeinflussung der Leistung der Primärspule 22 im Leistungsbetrieb einen planmäßigen Wechsel der Energiequellen-Kennung. Auch eine Kombination ist möglich, beispielsweise nach dem 2-Bit-Muster der Figur 5, wobei die empfangene Leistung in der Abfolge codiert ist.

Der (zwangsweise) höhere Energieeintrag in die Sekundärspule 32 im Leistungsbetrieb kann dazu genutzt werden, weitere Verbraucher im Wasserkocher 3 zu betreiben. Beispielsweise eine Beleuchtung (Innenraum und/oder Außenwand des Wasserkochers 3) und bzw. oder eine Anzeige und bzw. oder einen Sensor, insbesondere einen Temperatursensor. Die von einem Sensor erfassten Werte können im Wasserkocher 3 verarbeitet und bzw. oder auf der Anzeige dargestellt werden. Auch ist es möglich, diese an das Kochfeld 3 zu übermitteln und dort zur Steuerung zu nutzen bzw. von dem Kochfeld 3 weiter an ein Mobilgerät eines Nutzers zur Darstellung in einer Anwendung (App) zu übertragen. Auch wäre es denkbar, dass der Wasserkocher 3 eine weitere, leistungsfähigere Funkeinrichtung hat, die im Leistungsbetrieb direkt Werte an das Mobilgerät übermittelt. Die Werte müssen nicht unbedingt nur absolute Temperaturen sein; es ist auch möglich, die zu erwartende Restdauer bis zum Sieden oder das Siedeereignis als solches zu übermitteln. Die Beleuchtung könnte an die erfasste Temperatur angepasst werden. Der Wasserkocher 3 könnte Wände aus Glas haben.

Der Sendebetrieb bei Betätigen des Druckschalters 35 oder bei Ping ist so ausgelegt, dass die vom Druckschalter 35 oder von der Sekundärspule 32 zur Verfügung gestellte Energie ausreicht, ein bis drei Mal (nacheinander) identische Telegramme (Signale) zu versenden. Dies erfolgt innerhalb von wenigen Millisekunden, insbesondere weniger als 50 ms. Beispielsweise können mit einem Chip der Fa. enocean alle drei identischen Telegramme innerhalb von 40 ms versendet werden.

Der Wasserkocher 3 kann vorzugsweise eigensicher ausgebildet sein. Hierunter ist zu verstehen, dass einer Überhitzung des Wasserkochers 3 durch die Verwendung von Curie-Material oder einem Bimetall für den Kochgeschirrkörper 30 bzw. dessen Boden 31 sichergestellt werden kann. Bei einem Bimetall könnte der Wasserkocher 3 so eingerichtet sein, dass mit Auslösen des Bimetalls die Sendung des Telegramms unterbunden wird oder vor dem Unterbinden noch ein letztes Telegramm mit einer Energiequellen-Kennung=Bimetall gesendet wird.

### Bezugszeichenliste (Bestandteil der Beschreibung)

- Z: vertikale Richtung; Höhe

- 1: induktives Kochsystem

- 2: Kochfeld
- 20: Glaskeramikplatte
- 21: erste Kochstelle
- 22: Spule der ersten Kochstelle 21
- 23: drahtlose Empfangseinheit
- 24: Steuerungseinheit

- 3: Kochgeschirr; Garbehälter; Wasserkocher; Kessel
- 30: Kochgeschirrkörper
- 31: Boden des Kochgeschirrkörpers 30
- 32: Leiterschleifen
- 33: Auslass
- 34: Griff
- 35: Betätigungselement; Schalter; Druckschalter; Kippschalter; Taster
- 36: Temperatursensor; Temperaturschalter; Bimetall-Schalter
- 37: elektrischer Generator
- 38: drahtlose Sendeeinheit; Funkmodul

- 050: Betätigen des Betätigungselements 35 durch Benutzer
- 100: Aussenden erstes Signal von Sendeeinheit 38 des Kochgeschirrs 3
- 200: Empfangen erstes Signal durch Empfangseinheit 22 des Kochfelds
- 250: Auswerten empfangenes erstes Signal durch Kochfeld 2
- 300: induktives Betreiben erste Kochstelle 21 mit erster Leistung
- 400: Aufnehmen der ersten induktiven Leistung durch Leiterschleife des Kochgeschirrs 3
- 450: Aussenden zweites Signal von Sendeeinheit 38 des Kochgeschirrs 3
- 500: Empfangen zweites Signal durch Empfangseinheit 22 des Kochfelds
- 550: Auswerten empfangenes zweites Signal durch Kochfeld 2
- 600: induktives Betreiben erste Kochstelle 21 mit zweiter Leistung
- 700a: Aufheben der Betätigung des Betätigungselements 35 durch Temperaturschalter 36
- 700b: erneutes Betätigen des Betätigungselements 35 durch Temperaturschalter 36
- 700c: erneutes Betätigen des Betätigungselements 35 durch Benutzer
- 750: Aussenden drittes Signal von Sendeeinheit 38 des Kochgeschirrs 3
- 800: Empfangen drittes Signal durch Empfangseinheit 22 des Kochfelds
- 850: Auswerten empfangenes drittes Signal durch Kochfeld 2
- 900: Verändern/Beenden induktiven Betrieb der ersten Kochstelle 21

## Patentansprüche

1. Verfahren zum Betrieb eines induktiven Kochsystems (1),
wobei das induktive Kochsystem (1) aufweist:
ein Kochfeld (2) mit wenigstens einer ersten Kochstelle (21) und mit wenigstens einer Empfangseinheit (23), und
wenigstens ein Kochgeschirr (3) mit wenigstens einem Betätigungselement (35) und mit wenigstens einer Sendeeinheit (38),
wobei das Kochgeschirr (3) auf der ersten Kochstelle (21) des Kochfelds (2) angeordnet ist,
mit wenigstens den Schritten:
Aussenden (100) eines ersten Signals von der Sendeeinheit (38) des Kochgeschirrs (3) bei Betätigen (050) des Betätigungselements (35) des Kochgeschirrs (3) durch einen Benutzer,
Empfangen (200) des ersten Signals durch die Empfangseinheit (23) des Kochfelds (2),
Auswerten (250) des empfangenen ersten Signals durch das Kochfeld (2),
induktives Betreiben (300) wenigstens der ersten Kochstelle (21) des Kochfelds (2) mit einer ersten vorbestimmten Leistung für einen vorbestimmten Zeitraum in Abhängigkeit der Auswertung des empfangenen ersten Signals,
Aussenden (450) eines zweiten Signals von der Sendeeinheit (38) des Kochgeschirrs (3) bei induktiver Versorgung des Kochgeschirrs (3) durch die erste Kochstelle (21),
Empfangen (500) des zweiten Signals durch die Empfangseinheit (23) des Kochfelds (2), und
Auswerten (550) des empfangenen zweiten Signals durch das Kochfeld (2) und induktives Betreiben (600) der ersten Kochstelle (21) des Kochfelds (2) mit einer zweiten vorbestimmten Leistung in Abhängigkeit der Auswertung des empfangenen zweiten Signals,
wobei die zweite vorbestimmte Leistung größer als die erste vorbestimmte Leistung ist,
**gekennzeichnet durch**
a) den Schritt:
Verändern (900), vorzugsweise Beenden (900), des induktiven Betriebs der ersten Kochstelle (21) des Kochfelds (2),
welcher bei erneutem Betätigen (700c) des Betätigungselements (35) des Kochgeschirrs (3) durch den Benutzer erfolgt;
und/oder
b) die Schritte:
des induktiven Betreibens (300) der ersten Kochstelle (21) des Kochfelds (2) mit der ersten vorbestimmten Leistung für den vorbestimmten Zeitraum in Abhängigkeit der Auswertung des empfangenen ersten Signals,
ggfs. des Aufnehmens (400) der ersten vorbestimmten induktiven Leistung durch die Leiterschleife (32) des Kochgeschirrs (3),
des Aussendens (450) des zweiten Signals von der Sendeeinheit (38) des Kochgeschirrs (3) bei induktiver Versorgung des Kochgeschirrs (3) durch die erste Kochstelle (21),
des Empfangens (500) des zweiten Signals durch die Empfangseinheit (23) des Kochfelds (2) und
des Auswertens (550) des empfangenen zweiten Signals durch das Kochfeld (2) wiederholend erfolgen,
wobei bei Ausbleiben des Empfangens (500) des zweiten Signals durch die Empfangseinheit (23) des Kochfelds (2) der Schritt erfolgt:
Verändern (900), vorzugsweise Beenden (900), des induktiven Betriebs der ersten Kochstelle (21) des Kochfelds (2).

2. Verfahren nach Anspruch 1, **dadurch gekennzeichnet, dass**
das Kochgeschirr (3) ferner wenigstens einen Temperatursensor (36), vorzugsweise einen Temperaturschalter (36), insbesondere einen Bimetall-Schalter (36), aufweist, welcher ausgebildet ist, mittels des Betätigungselements (35) durch den Benutzer betätigt zu werden und bei Erreichen einer vorbestimmten Temperatur die Betätigung des Betätigungselements (35) des Kochgeschirrs (3) aufzuheben oder das Betätigungselement (35) des Kochgeschirrs (3) erneut zu betätigen,
das Verfahren ferner mit den weiteren Schritten:
Aussenden (750) eines dritten Signals von der Sendeeinheit (38) des Kochgeschirrs (3) beim Aufheben (700a) der Betätigung oder bei erneutem Betätigen (700b) des Betätigungselements (35) des Kochgeschirrs (3) durch den Temperatursensor (36),
Empfangen (800) des dritten Signals durch die Empfangseinheit (22) des Kochfelds (2),
Auswerten (850) des empfangenen dritten Signals durch das Kochfeld (2), und
Verändern (900), vorzugsweise Beenden (900), des induktiven Betriebs der ersten Kochstelle (21) des Kochfelds (2).

3. Verfahren nach Anspruch 2, **dadurch gekennzeichnet, dass**
das Kochgeschirr (3) ferner wenigstens einen elektrischen Generator (37) aufweist, welcher ausgebildet ist, gemeinsam mit dem Temperatursensor (36) mittels des Betätigungselements (35) durch den Benutzer betätigt zu werden,
wobei der elektrische Generator (37) ferner ausgebildet ist, durch seine Betätigung die elektrische Energie für das Aussenden (250) des ersten Signals, vorzugsweise und für das Aussenden (750) des dritten Signals, von der Sendeeinheit (38) des Kochgeschirrs (3) zu erzeugen.

4. Verfahren nach einem der vorherigen Ansprüche, **dadurch gekennzeichnet, dass**
das Kochgeschirr (3) ferner wenigstens eine Leiterschleife (32), vorzugsweise eine Mehrzahl von Leiterschleifen (32), aufweist, welche ausgebildet ist, die erste vorbestimmte induktive Leistung von der ersten Kochstelle (21) des Kochfelds (2) zu empfangen,
wobei die Leiterschleife (32) ferner ausgebildet ist, durch das Aufnehmen (400) der ersten vorbestimmten induktiven Leistung die elektrische Energie für das Aussenden (450) des zweiten Signals von der Sendeeinheit (38) des Kochgeschirrs (3) zu erzeugen.

5. Verfahren nach einem der vorherigen Ansprüche, **dadurch gekennzeichnet, dass** das Kochfeld (2) ausgebildet ist, durch das Empfangen (200) des ersten Signals aus einem Ruhe-Modus in einen Betriebsmodus versetzt zu werden.

6. Verfahren nach einem der vorherigen Ansprüche, **dadurch gekennzeichnet, dass**
das Kochfeld (2) neben der ersten Kochstelle (21) noch wenigstens eine weitere Kochstelle aufweist, und dass
der Schritt des induktiven Betreibens (300) für jede Kochstelle (21) des Kochfelds (2) mit der ersten vorbestimmten Leistung für den vorbestimmten Zeitraum in Abhängigkeit der Auswertung des empfangenen ersten Signals betrieben wird, bis das zweite Signal durch die Empfangseinheit (23) des Kochfelds (2) empfangen wird.

7. Verfahren nach einem der vorherigen Ansprüche, **dadurch gekennzeichnet, dass**
das Kochfeld (2) neben der ersten Kochstelle (21) noch wenigstens eine weitere Kochstelle aufweist, und dass
der Schritt des induktiven Betreibens (300) für jede Kochstelle (21) des Kochfelds (2) mit der ersten vorbestimmten Leistung für den vorbestimmten Zeitraum in Abhängigkeit der Auswertung des empfangenen ersten Signals parallel oder sequentiell ausgeführt wird.

8. Verfahren nach einem der vorherigen Ansprüche, **dadurch gekennzeichnet, dass** die Schritte
des induktiven Betreibens (300) der ersten Kochstelle (21) des Kochfelds (2) mit der ersten vorbestimmten Leistung für den vorbestimmten Zeitraum in Abhängigkeit der Auswertung des empfangenen ersten Signals,
ggfs. des Aufnehmens (400) der ersten vorbestimmten induktiven Leistung durch die Leiterschleife (32) des Kochgeschirrs (3),
des Aussendens (450) des zweiten Signals von der Sendeeinheit (38) des Kochgeschirrs (3) bei induktiver Versorgung des Kochgeschirrs (3) durch die erste Kochstelle (21),
des Empfangens (500) des zweiten Signals durch die Empfangseinheit (23) des Kochfelds (2) und
des Auswertens (550) des empfangenen zweiten Signals durch das Kochfeld (2) wiederholend erfolgen,
wobei bei Ausbleiben des Empfangens (500) des zweiten Signals durch die Empfangseinheit (23) des Kochfelds (2) der Schritt erfolgt:
Verändern (900), vorzugsweise Beenden (900), des induktiven Betriebs der ersten Kochstelle (21) des Kochfelds (2),
wobei der Schritt des Veränderns (900), vorzugsweise des Beendens (900), des induktiven Betriebs der ersten Kochstelle (21) des Kochfelds (2) nach einer vorbestimmten zeitlichen Verzögerung erfolgt.

9. Verfahren nach einem der vorherigen Ansprüche, **dadurch gekennzeichnet, dass** wenigstens das erste Signal des Kochgeschirrs (3) und das zweite Signal des Kochgeschirrs (3), vorzugsweise ferner das dritte Signal des Kochgeschirrs (3), eine Identifikation des Kochgeschirrs (3) und/oder des Kochgeschirrtyps aufweisen.

10. Induktives Kochsystems (1), mit
einem Kochfeld (2) mit
wenigstens einer ersten Kochstelle (21) und mit
wenigstens einer Empfangseinheit (23), und mit
wenigstens einem Kochgeschirr (3) mit
wenigstens einem Betätigungselement (35) und mit
wenigstens einer Sendeeinheit (38),
wobei das Kochfeld (2) und das Kochgeschirr (3) ausgebildet sind, ein Verfahren nach einem der Ansprüche 1 bis 9 auszuführen.

## Claims

1. Method for operating an inductive cooking system (1), the inductive cooking system (1) comprising:
a hob (2) that has at least one first hotplate (21) and at least one receiver unit (23), and
at least one set of cookware (3) that has at least one actuating element (35) and at least one transmitter unit (38),
the cookware (3) being arranged on the first hotplate (21) of the hob (2),
the method comprising at least the steps of:
transmitting (100) a first signal from the transmitter unit (38) of the cookware (3) when a user actuates (050) the actuating element (35) of the cookware (3),
receiving (200) the first signal by means of the receiver unit (23) of the hob (2),
evaluating (250) the received first signal by means of the hob (2),
inductively operating (300) at least the first hotplate (21) of the hob (2) at a first predetermined power for a predetermined period of time, depending on the evaluation of the received first signal,
transmitting (450) a second signal from the transmitter unit (38) of the cookware (3) during inductive supply of the cookware (3) by means of the first hotplate (21),
receiving (500) the second signal by means of the receiver unit (23) of the hob (2), and
evaluating (550) the received second signal by means the hob (2) and inductively operating (600) the first hotplate (21) of the hob (2) at a second predetermined power, depending on the evaluation of the received second signal,
the second predetermined power being greater than the first predetermined power,
**characterised by** repeatedly carrying out
a) the step of:
adjusting (900), preferably ending (900), the inductive operation of the first hotplate (21) of the hob (2),
which is carried out when the user actuates (700c) the actuating element (35) of the cookware (3) again;
and/or
b) the steps of:
inductively operating (300) the first hotplate (21) of the hob (2) at the first predetermined power for the predetermined period of time depending on the evaluation of the received first signal,
if necessary, consuming (400) the first predetermined inductive power by means of the conductor loop (32) of the cookware (3),
transmitting (450) the second signal from the transmitter unit (38) of the cookware (3) during inductive supply of the cookware (3) by means of the first hotplate (21),
receiving (500) the second signal by means of the receiver unit (23) of the hob (2), and evaluating (550) the received second signal by means of the hob (2),
the following step being carried out if the second signal is not received (500) by the receiver unit (23) of the hob (2):
adjusting (900), preferably ending (900), the inductive operation of the first hotplate (21) of the hob (2).

2. Method according to claim 1, **characterised in that** the cookware (3) furthermore comprises at least one temperature sensor (36), preferably a temperature switch (36), in particular a bimetal switch (36), which is designed to be actuated by the user by means of the actuating element (35) and, when a predetermined temperature is reached, to cancel the actuation of the actuating element (35) of the cookware (3) or to actuate the actuating element (35) of the cookware (3) again,
the method further comprising the further steps of:
transmitting (750) a third signal from the transmitter unit (38) of the cookware (3) when the actuation is cancelled (700a) or when the actuating element (35) of the cookware (3) is actuated again (700b) by means of the temperature sensor (36),
receiving (800) the third signal by means of the receiver unit (22) of the hob (2),
evaluating (850) the received third signal by means of the hob (2), and
adjusting (900), preferably ending (900), the inductive operation of the first hotplate (21) of the hob (2).

3. Method according to claim 2, **characterised in that** the cookware (3) further comprises at least one electrical generator (37) which is designed to be actuated, together with the temperature sensor (36), by the user by means of the actuating element (35),
the electrical generator (37) being further designed to generate, by means of the actuation thereof, the electrical energy for transmitting (250) the first signal, and preferably for transmitting (750) the third signal, from the transmitter unit (38) of the cookware (3).

4. Method according to any of the preceding claims, **characterised in that** the cookware (3) further comprises at least one conductor loop (32), preferably a plurality of conductor loops (32), which is designed to receive the first predetermined inductive power from the first hotplate (21) of the hob (2),
the conductor loop (32) being further designed to generate, by means of receiving (400) the first predetermined inductive power, the electrical energy for transmitting (450) the second signal from the transmitter unit (38) of the cookware (3).

5. Method according to any of the preceding claims, **characterised in that** the hob (2) is designed to be brought from an idle mode into an operating mode by receiving (200) the first signal.

6. Method according to any of the preceding claims, **characterised in that** the hob (2), in addition to the first hotplate (21), comprises at least one further hotplate, and
**in that** the inductive operating (300) step is operated for each hotplate (21) of the hob (2) at the first predetermined power for the predetermined period of time, depending on the evaluation of the received first signal, until the second signal is received by the receiver unit (23) of the hob (2).

7. Method according to any of the preceding claims, **characterised in that** the hob (2), in addition to the first hotplate (21), comprises at least one further hotplate, and
**in that** the inductive operating (300) step is carried out in parallel or sequentially for each hotplate (21) of the hob (2) at the first predetermined power for the predetermined period of time, depending on the evaluation of the received first signal.

8. Method according to any of the preceding claims, **characterised in that** the steps of
inductively operating (300) the first hotplate (21) of the hob (2) at the first predetermined power for the predetermined period of time, depending on the evaluation of the received first signal,
if necessary consuming (400) the first predetermined inductive power by means of the conductor loop (32) of the cookware (3),
transmitting (450) the second signal from the transmitter unit (38) of the cookware (3) during inductive supply of the cookware (3) by means of the first hotplate (21),
receiving (500) the second signal by means of the receiver unit (23) of the hob (2) and evaluating (550) the received second signal by means of the hob (2) are repeatedly carried out,
the following step being carried out if the second signal is not received (500) by the receiver unit (23) of the hob (2):
adjusting (900), preferably ending (900), the inductive operation of the first hotplate (21) of the hob (2),
the step of adjusting (900), preferably ending (900), the inductive operation of the first hotplate (21) of the hob (2) being carried out after a predetermined temporal delay.

9. Method according to any of the preceding claims, **characterised in that** at least the first signal of the cookware (3) and the second signal of the cookware (3), preferably furthermore the third signal of the cookware (3), have an identification means for the cookware (3) and/or the cookware type.

10. Inductive cooking system (1),
comprising a hob (2) that has
at least a first hotplate (21) and
at least one receiver unit (23),
and that has at least one set of cookware (3) that has
at least one actuating element (35) and
at least one transmitter unit (38),
the hob (2) and the cookware (3) being designed to carry out a method according to any of claims 1 to 9.

## Revendications

1. Procédé de commande d'un système de cuisson à induction (1), dans lequel le système de cuisson à induction (1) présente :
une plaque de cuisson (2) comportant au moins une première zone de cuisson (21) et au moins une unité de réception (23), et au moins un ustensile de cuisson (3) comportant au moins un élément d'actionnement (35) et au moins une unité d'émission (38), l'ustensile de cuisson (3) étant disposé sur la première zone de cuisson (21) de la plaque de cuisson (2), le procédé comprenant au moins les étapes :
d'émission (100) d'un premier signal par l'unité d'émission (38) de l'ustensile de cuisson (3) lors de l'actionnement (050) de l'élément d'actionnement (35) de l'ustensile de cuisson (3) par un utilisateur, de réception (200) du premier signal par l'unité de réception (23) de la plaque de cuisson (2), d'évaluation (250) du premier signal reçu par la plaque de cuisson (2), de commande par induction (300) d'au moins la première zone de cuisson (21) de la plaque de cuisson (2) à l'aide d'une première puissance prédéfinie pendant une période prédéfinie en fonction de l'évaluation du premier signal reçu, d'émission (450) d'un deuxième signal par l'unité d'émission (38) de l'ustensile de cuisson (3) lors de l'alimentation par induction de l'ustensile de cuisson (3) par la première plaque de cuisson (21), de réception (500) du deuxième signal par l'unité de réception (23) de la plaque de cuisson (2), et d'évaluation (550) du deuxième signal reçu par la plaque de cuisson (2) et de commande par induction (600) de la première zone de cuisson (21) de la plaque de cuisson (2) à l'aide d'une seconde puissance prédéfinie en fonction de l'évaluation du deuxième signal reçu, la seconde puissance prédéfinie étant supérieure à la première puissance prédéfinie, **caractérisé par**
a) l'étape :
de modification (900), de préférence d'arrêt (900), de la commande par induction de la première zone de cuisson (21) de la plaque de cuisson (2), laquelle étape est réalisée lorsque l'utilisateur actionne (700c) à nouveau l'élément d'actionnement (35) de l'ustensile de cuisson (3) ; et/ou
b) les étapes :
de commande par induction (300) de la première zone de cuisson (21) de la plaque de cuisson (2) à l'aide de la première puissance prédéfinie pendant la période prédéfinie en fonction de l'évaluation du premier signal reçu, éventuellement, d'absorption (400) de la première puissance inductive prédéfinie par la boucle conductrice (32) de l'ustensile de cuisson (3), d'émission (450) du deuxième signal par l'unité d'émission (38) de l'ustensile de cuisson (3) à l'aide de l'alimentation inductive de l'ustensile de cuisson (3) par la première zone de cuisson (21), de réception (500) du deuxième signal par l'unité de réception (23) de la plaque de cuisson (2), et d'évaluation (550) du deuxième signal reçu par la plaque de cuisson (2), lesquelles étapes sont réalisées de manière répétitive, dans lequel, en l'absence de la réception (500) du deuxième signal par l'unité de réception (23) de la plaque de cuisson (2), est réalisée l'étape :
de modification (900), de préférence d'arrêt (900), de la commande par induction de la première zone de cuisson (21) de la plaque de cuisson (2).

2. Procédé selon la revendication 1, **caractérisé en ce que** l'ustensile de cuisson (3) présente en outre au moins un capteur de température (36), de préférence un interrupteur thermostatique (36), en particulier un interrupteur bimétallique (36), lequel est conçu pour être actionné par l'utilisateur au moyen de l'élément d'actionnement (35) et, lorsqu'une température prédéfinie est atteinte, pour annuler l'actionnement de l'élément d'actionnement (35) de l'ustensile de cuisson (3) ou pour actionner à nouveau l'élément d'actionnement (35) de l'ustensile de cuisson (3), le procédé comprenant en outre les étapes supplémentaires :
d'émission (750) d'un troisième signal par l'unité d'émission (38) de l'ustensile de cuisson (3) lorsque l'actionnement (700a) est annulé ou lorsque l'élément d'actionnement (35) de l'ustensile de cuisson (3) est à nouveau actionné (700b) par le capteur de température (36), de réception (800) du troisième signal par l'unité de réception (22) de la plaque de cuisson (2), d'évaluation (850) du troisième signal reçu par la plaque de cuisson (2), et de modification (900), de préférence d'arrêt (900), de la commande par induction de la première zone de cuisson (21) de la plaque de cuisson (2).

3. Procédé selon la revendication 2, **caractérisé en ce que** l'ustensile de cuisson (3) présente en outre au moins un générateur électrique (37) conçu pour être actionné par l'utilisateur, conjointement avec le capteur de température (36) au moyen de l'élément d'actionnement (35), le générateur électrique (37) étant en outre conçu pour générer, par son actionnement, l'énergie électrique pour l'émission (250) du premier signal, de préférence pour l'émission (750) du troisième signal par l'unité d'émission (38) de l'ustensile de cuisson (3).

4. Procédé selon l'une des revendications précédentes, **caractérisé en ce que** l'ustensile de cuisson (3) présente en outre au moins une boucle conductrice (32), de préférence une pluralité de boucles conductrices (32), laquelle est conçue pour recevoir la première puissance inductive prédéfinie de la première plaque de cuisson (21) de la plaque de cuisson (2), la boucle conductrice (32) étant en outre conçue pour générer, par l'absorption (400) de la première puissance inductive prédéfinie, l'énergie électrique pour l'émission (450) du deuxième signal par l'unité d'émission (38) de l'ustensile de cuisson (3).

5. Procédé selon l'une des revendications précédentes, **caractérisé en ce que** la plaque de cuisson (2) est conçue pour être commutée d'un mode de veille à un mode de fonctionnement grâce à la réception (200) du premier signal.

6. Procédé selon l'une des revendications précédentes, **caractérisé en ce que** la plaque de cuisson (2) présente, en plus de la première zone de cuisson (21), au moins une autre zone de cuisson, et **en ce que** l'étape de commande par induction (300) pour chaque zone de cuisson (21) de la plaque de cuisson (2) est réalisée à l'aide de la première puissance prédéfinie pendant la période prédéfinie en fonction de l'évaluation du premier signal reçu jusqu'à ce que l'unité de réception (23) de la plaque de cuisson (2) reçoive le deuxième signal.

7. Procédé selon l'une des revendications précédentes, **caractérisé en ce que** la plaque de cuisson (2) présente, en plus de la première zone de cuisson (21), au moins une autre zone de cuisson, et **en ce que** l'étape de commande par induction (300) est réalisée en parallèle ou séquentiellement pour chaque zone de cuisson (21) de la plaque de cuisson (2) à l'aide de la première puissance prédéfinie pendant la période prédéfinie en fonction de l'évaluation du premier signal reçu.

8. Procédé selon l'une des revendications précédentes, **caractérisé en ce que** les étapes de commande par induction (300) de la première zone de cuisson (21) de la plaque de cuisson (2) à l'aide de la première puissance prédéfinie pendant la période prédéfinie en fonction de l'évaluation du premier signal reçu, éventuellement, d'absorption (400) de la première puissance inductive prédéfinie par la boucle conductrice (32) de l'ustensile de cuisson (3), d'émission (450) du deuxième signal de l'unité d'émission (38) de l'ustensile de cuisson (3) à l'aide de l'alimentation inductive de l'ustensile de cuisson (3) par la première zone de cuisson (21), de réception (500) du deuxième signal par l'unité de réception (23) de la plaque de cuisson (2), et d'évaluation (550) du deuxième signal reçu par la plaque de cuisson (2) sont réalisées de manière répétitive, dans lequel, en l'absence de la réception (500) du deuxième signal par l'unité de réception (23) de la plaque de cuisson (2), est réalisée l'étape :
de modification (900), de préférence d'arrêt (900), de la commande par induction de la première zone de cuisson (21) de la plaque de cuisson (2), l'étape de modification (900), de préférence d'arrêt (900), de la commande par induction de la première zone de cuisson (21) de la plaque de cuisson (2) est réalisée après un délai prédéfini.

9. Procédé selon l'une des revendications précédentes, **caractérisé en ce qu'**au moins le premier signal de l'ustensile de cuisson (3) et le deuxième signal de l'ustensile de cuisson (3), de préférence en outre le troisième signal de l'ustensile de cuisson (3), présentent une identification de l'ustensile de cuisson (3) et/ou du type d'ustensile de cuisson.

10. Système de cuisson à induction (1), comportant une plaque de cuisson (2) dotée d'au moins une première zone de cuisson (21) et d'au moins une unité de réception (23), et comportant au moins un ustensile de cuisson (3) doté d'au moins un élément d'actionnement (35) et d'au moins une unité d'émission (38), la plaque de cuisson (2) et l'ustensile de cuisson (3) étant conçus pour mettre en œuvre un procédé selon l'une des revendications 1 à 9.
